(19) **Europäisches Patentamt**

**European Patent Office**

**Office européen des brevets**

(11) **EP 0 929 427 B1**

(12) **EUROPÄISCHE PATENTSCHRIFT**

(45) Veröffentlichungstag und Bekanntmachung des Hinweises auf die Patenterteilung:
**14.08.2002 Patentblatt 2002/33**

(21) Anmeldenummer: **97909336.6**

(22) Anmeldetag: **30.09.1997**

(51) Int Cl.⁷: **B60T 8/00**, B60T 8/24,
B60T 8/30, B60T 8/34,
B60G 17/015

(86) Internationale Anmeldenummer:
**PCT/EP97/05364**

(87) Internationale Veröffentlichungsnummer:
**WO 98/14356 (09.04.1998 Gazette 1998/14)**

(54) **BREMSKRAFT-STEUERUNGSSYSTEM FÜR EIN STRASSENFAHRZEUG**

CONTROL SYSTEM FOR BRAKE POWER PROPORTIONING ON A ROAD VEHICLE

SYSTEME DE COMMANDE DE REPARTITION DU FREINAGE

(84) Benannte Vertragsstaaten:
**DE FR GB IT**

(30) Priorität: **30.09.1996 DE 19640467**

(43) Veröffentlichungstag der Anmeldung:
**21.07.1999 Patentblatt 1999/29**

(73) Patentinhaber: **DaimlerChrysler AG**
**70567 Stuttgart (DE)**

(72) Erfinder:
- **FREITAG, Rainer**
 **D-73277 Owen (DE)**
- **HARTL, Mathias**
 **D-71394 Rommelshausen (DE)**
- **HUBER, Wilfried**
 **D-75395 Ostelsheim (DE)**
- **PLATTE, Andreas**
 **D-73770 Denkendorf (DE)**
- **TROESTER, Harry**
 **D-71732 Tamm (DE)**

(56) Entgegenhaltungen:
EP-A- 0 201 843          EP-A- 0 368 359
EP-A- 0 378 202          EP-A- 0 672 565
DE-A- 3 923 599          DE-A- 3 941 702
DE-A- 4 014 561          DE-A- 4 422 518
US-A- 5 482 361

- PATENT ABSTRACTS OF JAPAN vol. 010, no. 211 (M-501), 24.Juli 1986 & JP 61 050858 A (NIPPON AIR BRAKE CO LTD), 13.März 1986,
- PATENT ABSTRACTS OF JAPAN vol. 017, no. 358 (M-1440), 7.Juli 1993 & JP 05 050914 A (TOYOTA MOTOR CORP), 2.März 1993,
- PATENT ABSTRACTS OF JAPAN vol. 096, no. 008, 30.August 1996 & JP 08 099624 A (TOYOTA MOTOR CORP), 16.April 1996,
- PATENT ABSTRACTS OF JAPAN vol. 014, no. 091 (M-0938), 20.Februar 1990 & JP 01 301445 A (AKEBONO BRAKE IND CO LTD), 5.Dezember 1989,
- PATENT ABSTRACTS OF JAPAN vol. 018, no. 231 (M-1599), 27.April 1994 & JP 06 024304 A (NISSAN MOTOR CO LTD), 1.Februar 1994,
- PATENT ABSTRACTS OF JAPAN vol. 095, no. 006, 31.Juli 1995 & JP 07 081534 A (HONDA MOTOR CO LTD), 28.März 1995,

**Beschreibung**

Die Erfindung gemäß Patentanspruch 1 betrifft ein Bremskraft-Steuerungssystem für ein Straßenfahrzeug mit elektrisch steuerbarer Vierkreis-Bremsanlage, bei der die über die einzelnen Radbremsen entfaltbaren Bremsrkäfte radindividuell einstellbar sind und mit einem Fahrwerk, das mit Stelleinrichtungen zur Variation der an den Fahrzeugrädern wirksamen Normalkräfte ausgerüstet ist, wobei pro Fahrzeugrad mindestens eine Normalkraft-Stelleinrichtung vorgesehen ist, die Bremsanlage dahingehend ausgelegt ist, daß die mittels einer Vorderradbremse und der dieser entlang der Fahrzeugdiagonalen gesehen gegenüberliegend angeordneten Hinterradbremse entfaltbare Bremskraft insgesamt dem mit einem maximalen zwischen der Fahrbahn und den gebremsten Rädern wirksamen Kraftschlußbeiwert multiplizierten Fahrzeuggewicht entspricht, und die Stelleinrichtungen für die Normalkraftverteilung dahingehend ausgelegt sind, daß das Fahrzeuggewicht, im wesentlichen, d.h. abgesehen von kleinen, im Bereich weniger Prozent (z.B. 5 %) der im statischen Fall symmetrisch und etwa gleich verteilten Radlasten liegender Bruchteile derselben, auf einem der Vorderräder und dem diesem diagonal gegenüberliegend angeordneten Hinterrad des Fahrzeuges abstützbar ist.

Weiterhin betrifft die Erfindung gemäß Patentanspruch 10 ein Bremskraftsteuerungssystem bei dem eine Normalkrafteinstellung zur Stabilisierung der Kurvenfahrt eingesetzt wird.

Das erfindungsgemäße Bremskraft - Steuerungssystem vermittelt zumindest die folgenden Vorteile:

Mit Hilfe der Normalkraft-Stelleinrichtungen ist schon alleine eine wirksame Fahrdynamik-Regelung im Sinne einer Kompensation über- oder untersteuernden Lenkverhaltens des Fahrzeuges möglich, ohne daß hierzu von vornherein eine mit Bremsschlupf-Aufbau arbeitende Fahrdynamik-Regelung notwendig ist, die vielmehr erst dann aktiviert zu werden braucht, wenn die Normalkraft-Verteilungs-Steuerung zur Erzielung eines erwünschten Kurvenfahrt-Verhaltens nicht mehr ausreicht. Dadurch wird Bremsenverschleiß reduziert. Es ist auch möglich, über die beiden Radbremsen einer Fahrzeugdiagonalen praktisch dieselbe Fahrzeugverzögerung zu erzielen, die ansonsten nur durch Aktivierung sämtlicher Radbremsen erzielbar wäre. Demgemäß kann bei einem Ausfall einer Radbremse oder beider entlang einer Fahrzeugdiagonalen einander gegenüberliegender Radbremsen immer noch die nahezu höchstmögliche Fahrzeugverzögerung erreicht werden, was als erheblicher Sicherheitsgewinn anzusehen ist.

Zwar ist es durch die DE 42 01 496 A1 für sich bekannt, durch Ansteuerung von hydraulischen Fahrwerks-Stelleinrichtungen die aus den bei Kurvenfahrt auftretenden Wankmomenten resulierenden Radlast-Änderungen so zu verteilen, daß sich ein angestrebtes, nahezu neutrales Lenkverhalten einstellt, und es ist auch bekannt (DE 40 14 561), durch gesteuerte Veränderung der Nachgiebigkeit von Federungs- oder Stoßdämpferelementen bei Bremsungen auftretende Nickmomente aufzufangen, was ebenfalls einer Änderung der Radlastverteilung entspricht.

Im Unterschied zu den bekannten Steuerungseinrichtungen, bei denen die Radlastverteilung nur innerhalb relativ enger Grenzen veränderbar ist, d.h. in Relation zum Betrage der auftretenden Wank- und Nickmomente, ist bei dem erfindungsgemäßen Bremskraft-Steuerungssystem eine höchstmögliche Variation der Radlastverteilung vorgesehen, um eine entsprechend effektive Erweiterung des fahrdynamischen Regelbereiches zu erzielen, der für eine weitestmögliche Ausnutzung eines fahrdynamischen Bremseneingriffs erforderlich ist.

In vorteilhafter Gestaltung des Bremskraft-Steuerungssystems wird die für eine "Zweirad-Bremsung" mittels nur einer Vorderradbremse und der diagonal gegenüberliegenden Hinterradbremse erforderliche Bremskrafterhöhung durch druckerhöhende Ansteuerung der Bremsdruck-Stelleinrichtungen erzielt, was, da diese Art der Bremsung gleichsam nur für den Notfall gedacht ist, ohne weiteres möglich ist und nicht zu einem nennenswerten Mehrverschleiß führt.

Gleichwohl kann es zweckmäßig sein, wenn die Bremsen z.B. 4-Kolben-Bremssättel haben, wobei im normalen Bremsbetrieb nur ein Kolbenpaar und im Diagonalbremsbetrieb die weiteren Kolbenpaare zur Bremskraftentfaltung ausgenutzt werden.

Besonders vorteilhaft ist es, wenn das Bremskraft-Steuerungssystem dahingehend ausgelegt ist, daß für Rückwärtsfahrt eine Bremskraft-Aufteilung mit relativ höherem Hinterachs-Bremskraftanteil als dem Vorderacbs-Bremskraftanteil nutzbar ist, damit auch bei Rückwärtsfahrt unter schlechten Straßenverhältnissen noch bestmögliche Fahrzeugverzögerungen erreichbar sind.

Wenn, wie gemäß Anspruch 5 vorgesehen, am Beginn einer Bremsung lediglich eine der Radbremsen zur Bremskraftentfaltung herangezogen wird, so kann aus einem Vergleich eines gemessenen Wertes der Fahrzeugverzögerung mit einem aufgrund der geometrischen Bremsendaten und des gemessenen Bremsdruckes berechneten Wertes der Sollverzögerung auf den Zustand der Bremsbeläge geschlossen und eine diesbezügliche Diagnose auf einfache Weise durchgeführt werden.

Analog kann, wie gemäß den Merkmalen des Anspruchs 6 vorgesehen, durch eine zeitweise Aktivierung lediglich einer der Radbremsen der aktuell gegebene Wert des Fahrbahn-Reibbeiwertes ($\mu$) ermittelt werden; derartige Aktivierungen nur einer Radbremse erfolgen zweckmäßigerweise in regelmäßigen Zeitabständen und in Fahrsituationen, in denen der Fahrer die Bremsanlage nicht betätigt und das Fahrzeug mit einer im wesentlichen konstanten Geschwindigkeit rollt. Bei solchen zur Reibbeiwerterkennung erfolgenden Bremszyklen wird das gebremste Rad durch Aktivierung seiner Normalkraft-Stelleinrichtung so weit entlastet, daß die Radlast des gebremsten Rades auf einen kleinen Bruchteil von z.B. nur 10% bis 30% seiner bei ungebremster Fahrt wirksamen Radlast reduziert ist, so daß durch die Bremsung dieses Rades nur eine vom Fahrer nicht spürbare Fahrzeugverzögerung auftritt, wobei eine solche Verzögerung auch dadurch kompensiert werden kann, daß während des Reibbeiwert-Meßzyklus eine Kompensatorische Erhöhung des vom Fahrzeugmotor entfalteten Vortriebsmoments selbsttätig eingesteuert wird, so daß die durch die Einzelradbremsung entstehende Rückwirkung auf das Fahrzeug praktisch ausgeglichen wird. Während einer solchen Bremsung wird die eingesteuerte Rad-Bremskraft so weit gesteigert, bis der an diesem Rad auftretende Bremsschlupf einen für eine höchstmögliche Kraftschluß-Ausnutzung charakteristischen Wert von z.B. 30% bis 40% erreicht.

In bevorzugter Ausgestaltung des Bremskraft-Steuerungssystems ist vorgesehen, daß auch bei einer vom Fahrer initiierten, auf eine signifikante Fahrzeugverzögerung gerichteten Teil- oder Vollbremsung, ggf. auch eine zumindest in ihrer einleitenden Phase als automatisch gesteuerte Vollbremsung (Bremsassistent-Funktion) gerichtete Bremsung eine Ermittlung des nutzbaren Fahrbahn-Reibwertes μ erfolgt. Hierzu ist eine Ansteuerung des Bremskraft- und des Normalkraft-Steuerungssystems dahingehend vorgesehen, daß am Beginn der Bremsung ein überwiegender Anteil des Fahrzeuggewichts über nur zwei einander diagonal gegenüberliegende Fahrzeugräder, die dann entsprechend stärker gebremst werden, abgestützt wird und die Räder der anderen Fahrzeugdiagonalen entsprechend entlastet werden. An den entlasteten Fahrzeugrädern wird eine Ansteuerung der Radbremsen mit schrittweiser oder monoton-kontinuierlicher Erhöhung des Bremsdruckes vorgenommen und fortlaufend die Änderungsrate dω/dt der Raddrehzahl ermittelt. Für den Bremsdruck $p_B$, für den sich die maximale Änderungsrate der Raddrehzahl ergibt, wird gemäß der Beziehung

$$\mu = \frac{\theta \cdot \left(\dfrac{d\omega}{dt}\right)_{max} - M_B}{F_N \cdot r_{dyn}}$$

in der mit Θ das Trägheitsmoment des gebremsten entlasteten Rades, mit $F_N$ die an diesem wirksame Radlast, mit $r_{dyn}$ sein dynamischer Rollradius und mit $M_B$ das durch die Bremsdruckeinstellung bei maximaler Drehzahl-Änderungsrate gegebene Bremsmoment bezeichnet sind, der maximal nutzbare Fahrbahn-Reibbeiwert μ ermittelt, wobei das Bremsmoment $M_B$ seinerseits durch die Beziehung

$$M_B = p_B \cdot C_B$$

gegeben ist, in der mit $p_B$ der eingesteuerte Bremsdruck und mit $C_B$ ein die Bremsenauslegung berücksichtigender Proportionalitätsfaktor bezeichnet sind.

Diese Ermittelung des nutzbaren Fahrbahn-Reibbeiwertes sowohl für die linke als auch für die rechte Fahrzeugseite läßt gleichsam in eiem Meßzyklus auch erkennen, ob diese Reibbeiwerte voneinander verschieden sind, d.h. "μ-Split-Verhältnisse" vorliegen, die z.B. bei einer Bremsschlupf-Regelung besonders kritisch sind, so daß deren Kenntnis gleichsam für die Vorwahl von Regelungsparametern besonders wichtig ist.

Die den Merkmalen des Anspruchs 8 entsprechende Variante eines erfindungsgemäßen Bremskraft-Steuerungssystems hat den Vorteil, daß, unabhängig vom Beladungszustand des Fahrzeuges und der Fahrbahn-Topographie mit einer definierten Pedalstellung eines Bremskraft-Sollwertgebers stets auch derselbe - definierte - Wert der Fahrzeugverzögerung verknüpft ist, wodurch der Bremskomfort erheblich verbessert wird.

Bei einem Fahrzeug, das mindestens einen Elektroantrieb oder einen elektrischen Hilfsantrieb hat, der zur Entfaltung von Bremskraft in einen zur Aufladung der Fahrzeugbatterie geeigneten Rekuperations-Betrieb umschaltbar ist, ist eine Auslegung des Bremskraft-Steuerungssystems dahingehend besonders vorteilhaft, daß bei permanenter Überwachung des Betriebs- und Funktionszustandes der Fahrzeugbatterie zwar die Rekuperationsfähigkeit möglichst weitgehend zur Bremskraftentfaltung herangezogen wird, jedoch rechtzeitig, bevor ein Schnelladen der Fahrzeugbatterie nicht mehr möglich ist und ein Abfall der durch die Minderung des Rekuperations-Bremsmoments bedingten Fahrzeugverzögerung eintreten könnte, auch die Aktivierung der hydraulischen Radbremsen erfolgt, so daß eine sollwertgesteuerte Fahrzeugverzöge.rung zuverlässig eingehalten werden kann. Diese bedarfsgerechte Nutzung der elektrisch rekuperationsfähigen Energie zur Bremskraftentfaltung ermöglicht sowohl einen schonenden Betrieb der hydraulischen Bremsen als auch eine optimale Nutzung der Batteriekapazität, ohne die Batterie zu überlasten.

Mittels eines Bremskraft-Steuerungssystems gemäß den Merkmalen des Anspruchs 10 ist auch eine wirksame auf fahrdynamisch stabiles Verhalten eines Straßenfahrzeuges gerichtete Regelung implementierbar, in deren einleitender Phase eine Fahrdynamik-Regelung durch Verspannen des Fahrwerks mittels der Normalkraft-Stelleinrichtungen auf die fahrdynamisch jeweils günstigste Radlastverteilung erfolgt und, falls hierdurch allein fahrdynamische Stabilität noch nicht in ausreichendem Maße erreichbar ist, durch zusätzlichen Bremseneingriff und daraus resultierenden Bremsschlupf-Aufbau die fahrdynamisch günstigste Seitenführungskraft-Verteilung auf die Vorderund die Hinterräder des Fahrzeuges erzielt wird.

Weitere Einzelheiten des erfindungsgemäßen Bremskraft-Steuerungssystems und des fahrdynamischen Regelungssystems ergeben sich aus der nachfolgenden Beschreibung eines speziellen Ausführungsbeispiels sowie von Varianten desselben anhand der Zeichnung. Es zeigen:

Fig. 1    ein schematisch vereinfachtes Blockschaltbild eines erfindungsgemäßen Bremskraft-Steuerungssystems und

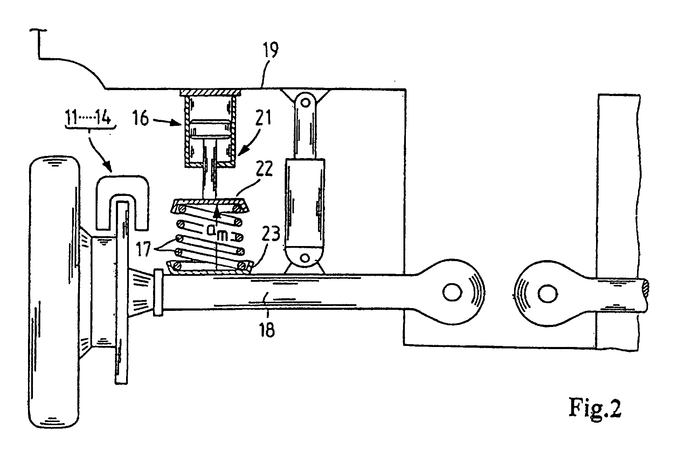

Fig. 2    Einzelheiten einer Normalkraft-Stelleinrichtung des Bremskraft-Steuerungssystems gemäß Fig. 1, in ebenfalls stark vereinfachter, schematischer Darstellung.

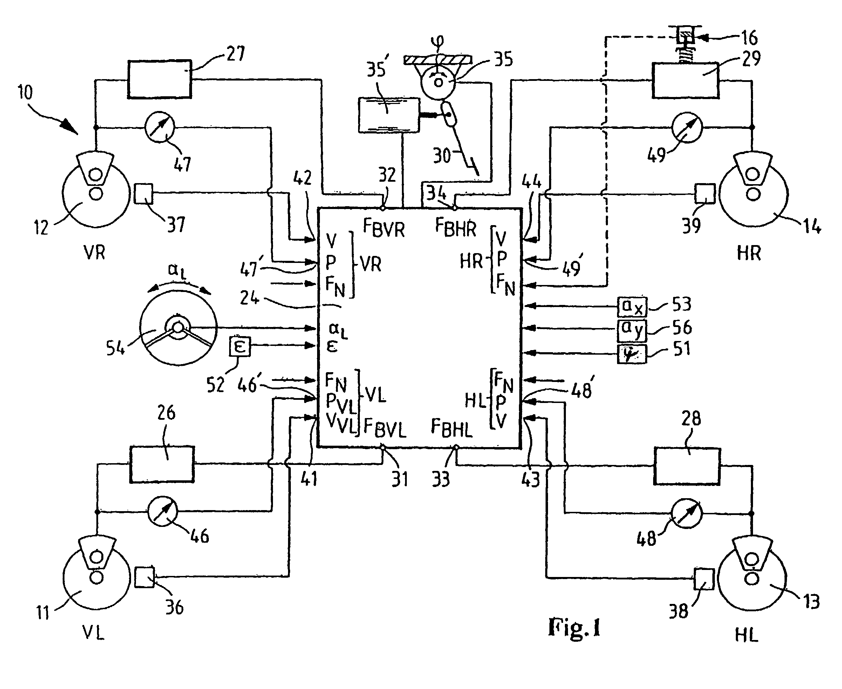

Das in der Fig. 1 insgesamt mit 10 bezeichnete Bremskraft-Steuerungssystem ist für ein Straßenfahrzeug mit vier Fahrzeugrädern gedacht, das zum einen mit einer elektrohydraulischen Bremsanlage ausgestattet ist, die es ermöglicht, rad-individuell verschiedene Bremsdrücke in die Radbremsen 11 bis 14 seiner Bremsanlage einzukoppeln und, zum anderen, mit einem sogenannten aktiven Fahrwerk ausgerüstet ist, das die Fähigkeit vermittelt, die über die Fahrzeugräder auf der Fahrbahn abstützbaren Radlasten, selbstverständlich bei gleichbleibender Summe derselben, situationsgerecht derart zu verändern, daß ein Höchstmaß an dynamischer Stabilität des Fahrzeuges erhalten bleibt.

Zu diesem Zweck sind den Fahrzeugrädern einzeln zugeordnete, elektrisch ansteuerbare Spanneinrichtungen 16 vorgesehen, mittels derer die Vorspannung "passiv" elastischer Federelemente, z.B. von Schraubenfedern, einstellbar ist, mittels derer ein dem jeweiligen Fahrzeugrad zugeordneter Achs-Lenker 18 der Vorder- oder der Hinterachse des Fahrzeuges, an dem das jeweilige Fahrzeugrad drehbar gelagert ist, auf- und abschwenkbar nachgiebig abgestützt ist. In der Fig. 1 ist Lediglich eine dieser Spanneinrichtungen schematisch dargestellt.

Diese Spann-Einrichtungen 16 haben beim dargestellten, speziellen Ausführungsbeispiel, karosseriefest angeordnete, doppelt wirkende, über nicht dargestellte Magnetventile elektrisch ansteuerbare lineare Hydrozylinder 21, mittels derer der - vertikale - Abstand karosserieseitig angeordneter Federteller 22 von lenkerseitig angeordneten Federtellern 23, zwischen denen die passiven elastischen Federelemente 17 der Fahrzeugfederung - eingespannt - angeordnet sind, gesteuert veränderbar ist, wodurch im Ergebnis die angesprochene Radlast-Einstellung erzielbar ist. Die Spanneinrichtungen 16 sind mit nicht dargestellten Weg-Gebern ausgerüstet, mittels derer die Position der Kolben der Hydrozylinder innerhalb deren Gehäuse erfaßbar ist. Beispielsweise können diese Spanneinrichtungen 16 so eingestellt werden, daß bei stehendem Fahrzeug ein weitaus überwiegender Teil des Fahrzeuggewichts auf einem der Vorderräder und dem diesem diagonal gegenüberliegenden Hinterrad abgestützt ist, wobei, Gleichheit der Vorderachs- und der Hinterachs-Last vorausgesetzt, das belastete Vorderrad und das belastete Hinterrad jeweils annähernd die Hälfte des Fahrzeuggewichts abstützen, während die beiden anderen Fahrzeugräder nahezu unbelastet sind und in dieser - fiktiven - Situation die Fahrzeugkarosserie gegenüber der Fahrbahn keinerlei Neigung aufweist.

Diese Art der Abstützung des Fahrzeuges über zwei die Fahrzeugdiagonale repräsentierende Fahrzeugräder ist auch im dynamischen Betrieb des Fahrzeuges von Bedeutung, wie nachfolgend noch erläutert werden wird.

Das Bremskraft-Steuerungssystem 10 gemäß Fig. 1 umfaßt den Radbremsen 11 bis 14 je einzeln zugeordnete Bremsdruck-Stelleinrichtungen 26, 27, 28 und 29, die in der Reihenfolge ihrer Numerierung der linken Vorderradbremse 11, der rechten Vorderradbremse 12, der linken Hinterradbremse 13 und der rechten Hinterradbremse 14 zugeordnet sind.

Diese Bremsdruck-Stelleinrichtungen sind so ausgebildet, daß sie den Bremsdruck in der jeweiligen Radbremse 11 bis 14 erhöhen, halten oder erniedrigen, wenn und solange an diesbezüglichen Sollwert-Ausgängen 31 bis 34 einer elektronischen Steuereinheit 24 des Bremskraft-Steuerungssystems die diesbezügliche Information enthaltende Sollwert-Ausgangssignale anstehen.

Die elektronische Steuereinheit 24 ist, ihrerseits, über mindestens einen elektromechanischen oder elektronischen Positionsgeber 35 oder 35' ansteuerbar, der ein elektrisches Ausgangssignal erzeugt, das ein Maß für den Betrag der Fahrzeugverzögerung ($-a_x$) ist, die der Fahrer durch Betätigung der Bremsanlage erzielen möchte.

Um das dynamische Verhalten der Fahrzeugräder und damit auch - indirekt - des Fahrzeuges erfassen zu können, sind den Fahrzeugrädern einzeln zugeordnete Raddrehzahlsensoren 36 bis 39 vorgesehen, die für die Radumfangsgeschwindigkeiten charakteristische elektrische Ausgangssignale erzeugen, die der elektronischen Steuereinheit 24 an diesbezüglichen Informations-Eingängen 41 bis 44 zugeleitet sind.

Des weiteren sind den Radbremsen 11 bis 14 einzeln zugeordnete, elektromechanische oder elektronische Druckgeber 46 bis 49 vorgesehen, die elektrische Ausgangssignale erzeugen, die ein Maß für den in die jeweilige Radbremse 11 bis 14 eingekoppelten Bremsdruck sind und der elektronischen Steuereinheit 24 an diesbezüglichen Bremsdruck-Informationseingängen 46' bis 49' zugeleitet sind.

Des weiteren ist das Fahrzeug mit einem Giergeschwindigkeitssensor 51 versehen, der elektrische Ausgangssignale erzeugt, die ein Maß für die Giergeschwindigkeit $\dot{\psi}$ sind, mit der Dreh-Bewegungen des Fahrzeugs um seine Hochachse erfolgen, sei es dadurch, daß das Fahrzeug - dynamisch stabil - eine Kurve durchfährt, oder dadurch, daß das Fahrzeug dynamisch instabil wird, weil, z.B., die Seitenführungskraft der Hinterräder nicht mehr ausreicht, um das Fahrzeug in der Spur zu halten.

Anhand einer durch die elektronische Steuereinheit 24 nach gängigen Kriterien erfolgenden Auswertung und Verarbeitung der Ausgangssignale des Pedalstellungsgebers 35 bzw. 35', die den Fahrerwunsch nach Fahrzeugverzögerung repräsentieren, sowie der Ausgangssignale der Raddrehzahlsensoren 36 bis 39 sowie der Bremsdruckgeber 46 bis 49 als Istwert-Geber zu Ansteuersignalen für die Bremsdruck-Stelleinrichtungen 26 bis 29 sind mittels des insoweit nach Aufbau und Funktion erläuterten Bremskraft-Steuerungssystems 10 mindestens die folgenden Funktionen implementierbar:

a) Steuerung des Zielbremsbetriebs nach Maßgabe vom Fahrer durch Betätigung des Bremspedals eingesteuerter Sollwert-Signale;

b) Steuerung der Vorderachs/Hinterachs-Bremskraftverteilung, z.B. im Sinne der Einhaltung einer idealen Bremskraftverteilung unter Berücksichtigung von durch differenzierende Verarbeitung der Drehzahlsensor-Ausgangssignale ermittelten Werten der Fahrzeugverzögerung;

c) ggf. selbsttätige Auslösung einer Vollbremsung, wenn das aus einer zeitlich differenzierenden Verarbeitung der Ausgangssignale des Pedalstellungsgebers 35 erkennbare Betätigungsverhalten des Fahrers erkennen läßt, daß dieser eine hohe Fahrzeugverzögerung wünscht;

d) Antiblockierregelung durch selbsttätige Bremsdruck-Modulation mittels der radindividuell ansteuerbaren Bremsdruck-Stelleinrichtungen 26 bis 29;

e) Antriebs-Schlupf-Regelung durch selbsttätige Aktivierung derjenigen Bremsdruck-Stelleinrichtungen, die den angetriebenen Fahrzeugrädern zugeordnet sind, z.B. der Bremsdruck-Stelleinrichtungen 28 und 29 der Hinterräder und

f) Fahrdynamik-Regelung durch selbsttätig gesteuerten Aufbau von Bremschlupf an einem oder mehreren der Fahrzeugräder, um dadurch Seitenführungskraft, z.B. an der Vorderachse abzubauen und insoweit einer Übersteuerungstendenz des Fahrzeuges entgegenzuwirken.

Darüber hinaus sind mit dem Bremskraft-Steuerungssystem 10 auch die Funktion einer Abstandsregelung bei Kolonnenfahrt durch selbsttätige Aktivierung der Bremsanlage in Abhängigkeit von Ausgangssignalen einer Sensorik, die den Abstand zu einem vorausfahrenden Fahrzeug erfaßt, sowie die Funktion eines selbsttätigen Feststell-Bremsbetriebs auf ansteigender bzw. abschüssiger Fahrbahn nach gängigen Plausibilitätskriterien durch selbsttätige Aktivierung der Bremsdruck-Stelleinrichtungen 26 bis 29 implementierbar.

Im Sinne der letztgenannten "Hillholder"-Funktion ist es vorteilhaft, wenn das Fahrzeug auch mit einem Neigungssensor 52 ausgerüstet ist, der ein elektrisches Ausgangssignal erzeugt, das die Information über die Fahrbahn-Steigung $\varepsilon$ enthält und in Kombination mit dem Fahrzeuggewicht auch in Einheiten einer auf das Fahrzeug wirkenden Abtriebskraft auswertbar ist, die bei einer bergab erfolgenden Bremsung des Fahrzeuges mit "weg"-gebremst werden muß und bei einer in Bergauffahrt erfolgenden Bremsung die Fahrzeugverzögerung unterstützt.

Um hinsichtlich der Ermittlung der bei einer Bremsung auftretenden Fahrzeuglängsverzögerung ($a_x$) nicht auf eine Auswertung der Ausgangssignale der Raddrehzahlsensoren 36 bis 39 angewiesen zu sein, die mit zunehmendem Bremsschlupf mit zunehmender Ungenauigkeit behaftet wäre, ist das Fahrzeug auch mit einem Längsbeschleunigungs- bzw. Verzögerungs-Sensor 53 ausgerüstet, der für die am Fahrzeug wirksame Längs-Beschleunigung bzw. -Verzögerung charakteristische Ausgangssignale erzeugt, die der elektronischen Steuereinheit 24 ebenfalls als Informations-Eingabesignale zugeleitet sind und von dieser im Sinne eines Soll-Ist-Wert-Vergleichs verarbeitbar sind.

Des weiteren ist der elektronischen Steuereinheit 24 auch das - elektrische - Ausgangssignal eines Lenkwinkel($\alpha$) - Sensors zugeleitet, anhand dessen die elektronische Steuereinheit 24 erkennt, welchen Bahnradius der Fahrer bei Kurvenfahrt einstellen will. Unter Mitverarbeitung der Ausgangssignale der Raddrehzahlsensoren 36-39 ermittelt die elektronische Steuereinheit 24 die hierbei zu erwartende Querbeschleunigung, zu deren "direkter" Erfassung auch ein elektronischer oder elektromechanischer Querbeschleunigungs ($a_y$)-Sensor 56 vorgesehen ist, dessen elektrisches Ausgangssignal ein direktes Maß für den jeweils erreichten Wert der Querbeschleunigung $a_y$ ist. Aus einem Vergleich des errechneten Querbeschleunigungs-Wertes mit dem gemessenen und/oder anhand der Ausgangssignale des Giergeschwindigkeits-Sensors 51, sowie auch aus der vergleichenden Verarbeitung der Ausgangssignale der Raddrehzahlsensoren 36 bis 39 erkennt die elektronische Steuereinheit 24, ob das Fahrzeug in der beabsichtigten Bahn verbleibt oder nicht und trifft im zweitgenannten Fall selbsttätig die Entscheidung über fahrdynamische Regelungs-Maßnahmen, die geeignet sind, einer Über- oder Unter-Steuerungstendenz des Fahrzeuges entgegenzuwirken.

Um hierbei, d.h. zum Zweck der Fahrdynamik-Regelung, die Spann-Einrichtungen 16 des "aktiven" Fahrwerks wirkungsvoll mit ausnutzen zu können, sind diese dahingehend ausgelegt, daß die passiven - elastischen - Federelemente 17, deren Vorspannung im eingefederten Zustand bei stehendem Fahrzeug, symmetrische Lastverteilung bezüglich der vertikalen Längsmittelebene des Fahrzeuges vorausgesetzt, jeweils der halben Achslast entspricht, mittels der Hydrozylinder 21 der Spanneinrichtunge 16 soweit zusammendrückbar sind, daß ihre Federvorspannung wesentlich höher ist als der halbe Wert der Achslast einschließlich einer z.B. beim Bremsen des Fahrzeuges in Längsrichtung auftretenden dynamischen Achslastvergrößerung und vorzugsweise dem jeweils maximal erreichbaren Wert der Achslast entspricht; des weiteren sind die Spanneinrichtungen 16 dahingehend ausgelegt, daß die Federelemente 17, durch "Einfahren" der Hydrozylinder im Sinne einer Vergrößerung der Federlänge so weit entspannbar sind, daß ihre Rest-Vorspannung nur noch einem geringen Bruchteil von z.B. einigen Prozent der in einem stationären Betriebszustand des Fahrzeuges, in dem auf dieses weder Längs- noch Querbeschleunigungen wirken, gegebenen Radlast entspricht. Durch diese mittels der elektronischen Steuereinheit 24 steuerbare Einstellbarkeit der Feder-Vorspannungen besteht die Möglichkeit, den überwiegenden Teil des Fahrzeug-Gesamtgewichtes auf zwei Fahrzeugräder zu verteilen, nämlich jeweils auf ein Vorderrad und das diesem diagonal gegenüberliegend angeordnete Hinterrad und das andere Vorderrad und das diesem diagonal gegenüberliegende Hinterrad praktisch vollständig zu entlasten.

In Anpassung an diese Auslegung der Spann-Einrichtungen 16 sind die Bremsdruck-Stelleinrichtungen 26 bis 29 so ausgelegt, daß mittels je einer der Vorderradbremsen 11 und 12 allein eine Bremskraft aufbaubar ist, die dem gesamten Vorderachs-Lastanteil des Fahrzeuges, multipliziert mit einem Maximalwert des Kraftflußbeiwertes $\mu$ ($\mu$ = ca. 1), der bei trockener griffiger Straße zwischen der Fahrbahn und den Fahrzeugrädern ausnutzbar ist, entspricht; desgleichen sind die Bremsdruck-Stelleinrichtungen 28 und 29 der Hinterradbremsen 13 und 14 jeweils so ausgelegt, daß mittels einer der beiden Radbremsen eine Bremskraftentfaltung möglich ist, die dem mit dem Maximalwert des Kraftflußbeiwertes multiplizierten Hinterachs-Lastanteil entspricht.

Bei dieser Auslegung der Bremsdruck-Stelleinrichtungen 26 bis 29 und erforderlichenfalls auch der Radbremsen 11 bis 14 kann allein durch Aktivierung z. B. der linken Vorderradbremse 11 und der rechten Hinterradbremse 14 eine Fahrzeugverzögerung des Wertes $\mu \cdot G_g$ ($G_g$ = Fahrzeuggesamtgewicht) entfaltet werden, d.h. eine Fahrzeugverzögerung, die ansonsten nur unter Ausnutzung sämtlicher Radbremsen 11 bis 14 des Fahrzeuges erzielbar wäre.

Das Fahrzeug ist daher bei Ausfall einer Vorderradbremse 11 oder 12 oder einer Hinterradbremse 13 oder 14, aber auch bei Ausfall einer Vorderradbremse und der dieser diagonal gegenüberliegend angeordneten Hinterradbremse noch mit mindestens annähernd derselben maximalen Verzögerung bremsbar wie bei völlig intakter Bremsanlage.

Dasselbe gilt sinngemäß, wenn ein Reifen beschädigt ist, worauf die elektronische Steuereinheit 44 in der Weise reagieren kann, daß das schadhafte Fahrzeugrad entlastet wird, desgleichen das diesem diagonal gegenüberliegende Hinterrad und das Fahrzeuggewicht gleichsam auf die Räder der anderen Fahrzeug-Diagonalen verlagert wird.

Darüber hinaus ist das Bremskraft-Steuerungssystem 10 auch auf die Implementierung der folgenden Funktionen ausgelegt:

Davon ausgehend, daß das Fahrzeug von sich aus ein untersteuerndes Lenkverhalten zeigt, kann in einer Kurvenfahrt, in der normalerweise das kurveninnere Vorderrad entlastet ist, z.B. in einer Rechtskurve das rechte Vorderrad, dieses durch Aktivierung seiner Spann-Einrichtung 16 im Sinne eines Zusammendrückens seiner Radfeder so kräftig auf die Fahrbahn gedrückt werden, daß praktisch gleiche Radlasten an den Vorderrädern wirksam sind. Zweckmäßigerweise wird bei einer solchen Radlast-Einstellung gleichzeitig auch die Spann-Einrichtung 16 des kurvenäußeren Vorderrades im Sinne einer Verlängerung - Entlastung - ihrer Radfeder angesteuert und zur Radlast-Angleichung an den beiden Vorderrädern mit ausgenutzt. Dies hat, gleichen Kraftschlußbeiwert an den Vorderrädern vorausgesetzt, auch gleiche Kraftschlußausnutzung an denselben zur Folge. Es versteht sich, daß mittels der Spanneinrichtungen 16 auch andere Radlastverteilungen einsteuerbar sind.

Durch das Verspannen des Fahrzeuges, das durch Niederdrücken des rechten Vorderrades und Einziehen des Kolbens der Spanneinrichtung 16 des linken Vorderrades erfolgt, wird gleichzeitig das kurveninnere Hinterrad des Fahrzeuges weiter entlastet bzw. das kurvenäußere Hinterrad zusätzlich belastet, mit der Folge, daß ungleiche Kraftschluß-Ausnutzung an den Hinterrädern entsteht, und mit der weiteren Folge, daß die Summe der Seitenführungskräfte der Hinterräder insgesamt abnimmt und das Fahrzeug in die Kurve eindreht, wobei der zuvor bestehenden Untersteuerungstendenz gleichsam durch eine Übersteuerungstendenz entgegengewirkt wird, die durch die Radlast-Einstellung erzielt wird.

Hat das Fahrzeug, andererseits, ein übersteuerndes Lenkverhalten, so kann die Übersteuerungstendenz dadurch reduziert oder kompensiert werden, daß die Spanneinrichtung des in der Kurvenfahrt schon stärker belasteten kurvenäußeren Vorderrades zusätzlich im Sinne einer Vergrößerung der Feder-Vorspannung dieses Vorderrades angesteuert wird, womit auch eine Vergrößerung der Normalkraft am kurveninneren Hinterrad einhergeht, mit der Folge, daß das Fahrzeug an der Hinterachse gleichsam stabilisiert wird, und die Seitenführungskraft an der Vorderachse abnimmt, weil die Radlastdifferenz an der Vorderachse zunimmt. Zweckmäßigerweise wird auch in diesem Fall die Spanneinrichtung des kurveninneren Vorderrades gegensinnig, d.h. im Sinne einer Spannungsverminderung seiner Radfeder, aktiviert.

Für den Fall, daß diese allein mit Hilfe der Spann-Einrichtungen 16 erzielte "Fahrdynamik-Regelung" zur dynamischen Stabilisierung des Fahrzeuges nicht ausreicht und zusätzlich die Fahrdynamik-Regelung durch Bremsen-Eingriff am stärker belasteten kurvenäußeren Vorderrad wirksam werden muß, so kann an diesem ein umso höheres rückdrehendes, stabilisierendes Moment aufgebracht werden. Im Ergebnis wird der einer fahrdynamischen Regelung zugängliche Bereich erweitert, da sich die Radlasteinstellung gleichsam als Erhöhung des Fahrbahn-Reibwertes auswirkt.

Es wird davon ausgegangen, daß die Erläuterung elektronisch-schaltungstechnischer Einzelheiten der elektronischen Steuereinheit 24 nicht erforderlich ist, da ein Fachmann diese bei Kenntnis ihres Zweckes mit gängigen Mitteln der elektronischen Steuerungs- und Regelungstechnik realisieren kann. Dies gilt auch mit Bezug auf die weiteren, nachfolgend zu erläuternden Funktionen, die, dank der "kräftigen" Auslegung der Bremsdruck- bzw. Bremskraft-Stelleinrichtungen 26 bis 29, insbesondere der Bremskraft-Stelleinrichtungen 28 und 29 der Hinterradbremsen 13 und 14 des Bremskraft-Steuerungssystems möglich sind. Demgemäß ist vorgesehen, daß dieses bei Rückwärtsfahren auf eine Bremskraftverteilung mit relativ höherem Hinterachs-Bremskraft-Anteil als an der Vorderachse umgeschaltet wird, so daß sich insbesondere im Winter auf schneeglatter, abschüssiger Straße ein erheblich besseres Verzögerungsverhalten erzielen läßt.

Des weiteren ist eine Bremskraft-Steuerung implementiert, die eine Erkennung des Zustandes der Bremsbeläge ermöglicht. Hierzu wird zeitweise, z.B. am Beginn einer Bremsung, nur mit einem Rad gebremst und die aus dem gemessenen Radbremsdruck und den geometrischen Daten der Bremse errechnete theoretische Fahrzeugverzögerung mit der mittels des Verzögerungssensors 53 gemessenen oder anhand der Ausgangssignale der Raddrehzahlfühler 36 bis 39 ermittelten Verzögerung verglichen. Ergibt sich hierbei eine außerhalb eines hinnehmbaren Toleranzbereiches liegende Verzögerungs-Differenz, so wird eine ZustandsAnzeige angesteuert, die dem Fahrer signalisiert, welcher Bremsbelag nur noch einen unzulänglichen Reibbeiwert hat.

Einzelradbremsungen bei geringer Radlast, die z.B. in regelmäßigen kurzen Zeitabständen wiederholt werden, können auch zur Bestimmung des Fahrbahn-Reibwertes ($\mu$) genutzt werden. Solche Bremsungen lassen sich ohne weiteres so steuern, daß sie nicht zu einer nennenswerten Fahrzeugverzögerung führen, die den Fahrer stören könnte, da der gemäß der Beziehung $\mu = F_B/F_N$ als das Verhältnis der Bremskraft $F_B$ zur Normalkraft $F_N$ (Radlast) gegebene Reibbeiwert $\mu$ sich bei einstellbar niedrigen Werten der Radlast ermitteln läßt.

Die hierbei wirksame Bremskraft $F_B$ ist bei bekannter Bremsenauslegung z.B. durch Messung des Bremsdruckes ermittelbar, der bei einer solchen Bremsung so lange erhöht wird, bis das gebremste Fahrzeugrad in einen definierten hohen Schlupf einläuft, der durch Auswertung der Raddrehzahlsensor-Ausgangssignale ermittelbar ist. Die Kenntnis des Fahrbahn-Reibbeiwertes ermöglicht es, die elektronische Steuereinheit 24 gleichsam auf den bei vorgegebenem Reibbeiwert günstigsten Regelalgorithmus einzustellen.

Auch bei einer vom Fahrer initiierten, auf eine signifikante Fahrzeugverzögerung gerichteten Teil- oder Vollbremsung, ggf. auch bei einer zumindest in ihrer einleitenden Phase als automatisch gesteuerte Vollbremsung (Bremsassistent-Funktion) ausgeführten Bremsung erfolgt eine Ermittlung des nutzbaren Fahrbahn-Reibwertes $\mu$. Hierzu ist eine Ansteuerung des Bremskraft- und des Normalkraft-Steuerungssystems dahingehend vorgesehen, daß am Beginn der Bremsung ein überwiegender Anteil des Fahrzeuggewichts über nur zwei einander diagonal gegenüberliegende Fahrzeugräder, die dann entsprechend stärker gebremst werden, abgestützt wird und die Räder der anderen Fahrzeugdiagonalen entsprechend entlastet werden. An den entlasteten Fahrzeugrädern wird eine Ansteuerung der Radbremsen mit schrittweiser oder monoton-kontinuierlicher Erhöhung des Bremsdruckes vorgenommen und fortlaufend die Änderungsrate $d\omega/dt$ der Raddrehzahl ermittelt. Für den Bremsdruck $p_3$, für den sich die maximale Änderungsrate der Raddrehzahl ergibt, wird gemäß der Beziehung

$$\mu = \frac{\theta \cdot \left(\frac{d\omega}{dt}\right)_{max} - M_B}{F_N \cdot r_{dyn}}$$

in der mit $\Theta$ das Trägheitsmoment des gebremsten entlasteten Rades, mit $F_N$ die an diesem wirksame Radlast, mit $r_{dyn}$ sein dynamischer Rollradius und mit $M_B$ das durch die Bremsdruckeinstellung bei maximaler Drehzahl-Änderungsrate gegebene Bremsmoment bezeichnet sind, der maximal nutzbare Fahrbahn-Reibbeiwert $\mu$ ermittelt, wobei das Bremsmoment $M_B$ seinerseits durch die Beziehung

$$M_B = p_B \cdot C_B$$

gegeben ist, in der mit $p_B$ der eingesteuerte Bremsdruck und mit $C_B$ ein die Bremsenauslegung berücksichtigender Proportionalitätsfaktor bezeichnet sind.

Diese Ermittelung des nutzbaren Fahrbahn-Reibbeiwertes sowohl für die linke als auch für die rechte Fahrzeugseite läßt gleichsam in eiem Meßzyklus auch erkennen, ob diese Reibbeiwerte voneinander verschieden sind, d.h. "$\mu$-Split-Verhältnisse" vorliegen, die z.B. bei einer Bremsschlupf-Regelung besonders kritisch sind, so daß deren Kenntnis gleichsam für die Vorwahl von Regelungsparametern besonders wichtig ist.

Des weiteren kann eine Art der Bremskraft-Steuerung vorgesehen sein, die bei einer vorgegebenen Stellung des Bremspedals 30 stets dieselbe Fahrzeugverzögerung bewirkt, unabhängig davon, ob das Fahrzeug in Bergaufoder Bergab-Fahrt gebremst wird und auch unabhängig davon, wie das Fahrzeug beladen ist und/oder ob es im Gespann-Betrieb mit einem Anhänger gefahren wird. Im Falle einer Bergab-Fahrt, die anhand der Ausgangsignale des Neigungssensors 52 erkennbar ist, wird, verglichen mit dem Fall, daß auf horizontaler Fahrbahn gebremst wird, eine höhere Bremskraft eingesteuert, im Falle einer Bremsung bei Bergauf-Fahrt eine niedrigere, so daß der Fahrer stets mit derselben Pedalkraft, die er gegen die Rückstellkraft einer nicht dargestellten Wegsimulationsfeder aufbringen muß, einen definierten Betrag der Fahrzeugverzögerung einstellen kann.

Für den Fall, daß das Fahrzeug einen elektromotorischen Antrieb oder Hilfsantrieb hat, der ein Bremsen auch durch Rekuperation kinetischer Energie durch Umschalten des elektromotorischen Antriebs in den Generatorbetrieb ermöglicht, wird der Beitrag der Radbremsen 11 bis 14 zur Fahrzeugverzögerung so gesteuert, daß das durch Rekuperation gewinnbare Bremsmoment zwar weitestmöglich ausgenutzt wird, jedoch, falls die Bremswirkung nicht ausreicht, früh genug auf Bremsbetrieb mittels der Radbremsen 11 bis 14 umgeschaltet wird, wodurch auch ein gleichsam stetiger - "sanfter" Übergang von Rekuperations-Bremsung auf hydraulisch unterstützte Bremsung erzielt wird, den der Fahrer nicht spürt.

Davon ausgehend, daß sich durch Rekuperations-Bremsung, z.B. eines front-getriebenen Fahrzeuges Fahrzeugverzögerungen von bis zu 0,3g ($g=9{,}81ms^{-2}$) erzielen lassen, kann im statistisch weitaus bedeutendsten Bereich der Teilbremsung eine Schonung der mechanischen oder hydromechanischen Bremsen erzielt werden, indem bis zu der genannten Fahrzeug-Verzögerungsgrenze von ca. 0,3g die Fahrzeugverzögerung weitestmöglich, d.h. solange bei vorgegebener Fahrzeuggeschwindigkeit und Ladezustand der Batterie eine Rekuperations-Bremsung möglich ist, diese Art der Bremsung zur Fahrzeugverzögerung genutzt wird.

Für den Fall, daß das Fahrzeug den Vorderrädern einzeln zugeordnete elektrische Antriebsmotore hat, oder als allradgetriebenes Fahrzeug mit den Rädern einzeln zugeordneten Antriebsmotoren ausgebildet ist, sind diese auch im Fahrdynamik-Regelungsbetrieb als Rekuperations-Bremsen nutzbar, so daß auch insoweit eine wirksame Schonung der Radbremsen im übrigen erzielt werden kann.

**Patentansprüche**

**1.** Bremskraft-Steuerungssystem (10) für ein Straßenfahrzeug mit elektrisch steuerbarer Vierkreis-Bremsanlage, bei der die über die einzelnen Radbremsen (11 bis 14) entfaltbaren Bremskräfte radindividuell enstellbar sind, und mit einem Fahrwerk, das mit Stelleinrichtungen (16) zur Variation der an den Fahrzeugrädern wirksamen Normalkräfte ausgerüstet ist, wobei pro Fahrzeugrad mindestens eine Normalkraft-Stelleinrichtung (16, 17) vorgesehen ist, weiter die Bremsanlage dahingehend ausgelegt ist, daß die mittels einer Vorderradbremse (11 oder 12) und der zu dieser entlang der Fahrzeugdiagonalen gesehen, gegenüberliegend angeordneten Hinterradbremse (14 oder 13) entfaltbare Bremskraft insgesamt dem mit einem maximalen Betrag des zwischen der Fahrbahn und den gebremsten Rädern ausnutzbaren Kraftschlußbeiwertes μ multiplizierten Fahrzeuggewicht entspricht und die Stelleinrichtungen (16, 17) für die Normalkraftverteilung dahingehend ausgelegt sind, daß das Fahrzeuggewicht, im wesentlichen, d.h. abgesehen von einem kleinen, nur wenige Prozent der im statischen Fall symmetrisch etwa gleich verteilten Radlasten betragenden Bruchteil derselben, auf einem der Vorderräder und dem diesem diagonal gegenüberliegend angeordneten Hinterrad des Fahrzeuges abstützbar ist.

**2.** Bremskraft-Steuerungssystem nach Anspruch 1, **dadurch gekennzeichnet, daß** die Erhöhung der Bremskräfte im Bremsbetrieb, in dem nur eine Vorderradbremse (11 oder 12) und die dieser diagonal gegenüberliegend angeordnete Hinterrad-Bremse (14 oder 13) zur Bremskrafterzeugung ausgenutzt wird, durch Erhöhung des in diese Radbremsen eingekoppelten Bremsdruckes erfolgt.

**3.** Bremskraft-Steuerungssystem nach Anspruch 1, **dadurch gekennzeichnet, daß** die Radbremsen (11 bis 14) Vier-Kolben-Bremssättel haben, wobei im normalen Bremsbetrieb, dem die Ausnutzung sämtlicher Radbremsen (11 bis 14) entspricht, jeweils nur ein Kolbenpaar mit Druck beaufschlagbar ist und im Diagonalbremsbetrieb, in dem nur eine Vorderradbremse und eine Hinterradbremse mit Bremsdruck beaufschlagt werden, beide Kolbenpaare der Radbremsen mit Druck beaufschlagt werden.

**4.** Bremskraft-Steuerungssystem nach einem der Ansprüche 1 bis 3, **dadurch gekennzeichnet, daß** die Hinterradbremsen hinsichtlich der möglichen Bremskraft-Entfaltung dieselbe Auslegung haben wie die Vorderrad-Bremsen, und daß die Bremsanlage für Rückwärtsfahrt auf eine Bremskraft-Verteilung mit höherem Hinterachs-Bremskraftanteil als dem Vorderachs-Bremskraftanteil umschaltbar ist.

**5.** Bremskraft-Steuerungssystem nach einem der Ansprüche 1 bis 4, **dadurch gekennzeichnet, daß** zeitweise, vorzugsweise am Beginn einer Bremsung lediglich eine der Radbremsen (11 bis 14) zur Bremskraftentfaltung ausgenutzt wird und aus einem Vergleich eines gemessenen Wertes der Fahrzeugverzögerung mit einem aufgrund der geometrischen Bremsendaten und des gemessenen Bremsdruckes berechneten Wertes der Soll-Verzögerung ein Zustands-Signal für den Reibwert der Bremsbeläge gewonnen wird.

6. Bremskraft-Steuerungssystem nach einem der Ansprüche 1 bis 5, **dadurch gekennzeichnet, daß** zeitweise, vorzugsweise in regelmäßiger Folge, lediglich eine der Radbremsen (11 bis 14) zur Bremskraftentfaltung ausgenutzt wird, wobei während dieser Bremsung die Normalkraft-Stelleinrichtung des gebremsten Rades im Sinne einer Reduzierung der Radlast des gebremsten Rades angesteuert ist, derart, daß die Radlast auf einen kleinen Bruchteil, z.B. 10% bis 30%, der halben Achslast reduziert ist, und bei Erreichen eines für höchstmögliche Kraftschluß-Ausnutzung charakteristischen Schlupfwertes aus dem Verhältnis Bremskraft/Normalkraft der wirksame Fahrbahn-Reibwert ermittelt wird.

7. Bremskraft-Steuerungssystem nach einem der Ansprüche 1 bis 6, **dadurch gekennzeichnet, daß** bei einer vom Fahrer initiierten, auf eine signifikante Fahrzeugverzögerung gerichteten Teil- oder Vollbremsung eine Ansteuerung des Bremskraft- und Normalkraft-Steuerungssystems dahingehend erfolgt, daß am Beginn der Bremsung ein überwiegender Anteil, z.B. 80% bis 90%, des Fahrzeuggewichts über nur zwei einander diagonal gegenüberliegende Fahrzeugräder (z.B. das linke Vorderrad und das rechte Hinterrad) abgestützt wird und die Räder der anderen Fahrzeugdiagonalen entsprechend entlastet werden, und daß an mindestens einem, vorzugsweise beiden, der entlasteten Fahrzeugräder eine Ansteuerung der Radbremse(n) mit schrittweiser oder monoton-kontinuierlicher Erhöhung des Bremsdruckes erfolgt und fortlaufend die Änderungsrate $d\omega/dt$ der Raddrehzahl ermittelt und anhand des Maximalwertes $(d\omega/dt)_{max}$ der Drehzahländerungsrate der maximal zur Fahrzeugverzögerung nutzbare Reibbeiwert $\mu$ der Fahrbahn gemäß der Beziehung

$$\mu = \frac{\theta \cdot \left(\dfrac{d\omega}{dt}\right)_{max} - M_B}{F_N \cdot r_{dyn}}$$

ermittelt wird, in der mit $\Theta$ das Trägheitsmoment des gebremsten entlasteten Rades, mit $F_N$ die an diesem wirksame Radlast, mit $r_{dyn}$ sein dynamischer Rollradius und mit $M_B$ das durch die Bremsdruckentfaltung bei maximaler Drehzahl-Änderungsrate gegebene Bremsmoment bezeichnet sind, das seinerseits durch die Beziehung

$$M_B = p_B \, c_B$$

gegeben ist, in der mit $p_B$ der eingesteuerte Bremsdruck und mit $c_B$ ein die Bremsenauslegung berücksichtigender Proportionalitätsfaktor bezeichnet sind.

8. Bremskraft-Steuerungssystem nach einem der Ansprüche 1 bis 7, **dadurch gekennzeichnet, daß** die Bremskraft-Regelung verzögerungsabhängig erfolgt, derart, daß das Sollwert-Vorgabe-Signal, das der Fahrer durch Betätigung eines Bremspedals (30) einsteuert, einer definierten Fahrzeugverzögerung entspricht.

9. Bremskraft-Steuerungssystem nach einem der Ansprüche 1 bis 8, wobei das Fahrzeug mit mindestens einem batteriegespeisten elektrischen Antrieb oder Hilfsantrieb ausgerüstet ist, der zur Entfaltung von Bremskraft in einen zur Aufladung der Fahrzeugbatterie geeigneten Rekuperations-Betrieb umschaltbar ist, **dadurch gekennzeichnet, daß** unter permanenter Überwachung des Betriebs- und Funktionszustandes der Fahrzeugbatterie zwar die Rekuperationsfähigkeit möglichst weitgehend zur Bremskraftentfaltung ausgenutzt wird, jedoch rechtzeitig, bevor ein Schnelladen der Fahrzeugbatterie nicht mehr möglich ist, die Aktivierung der hydraulischen Radbremsen (11 bis 14) im Sinne der Einhaltung der sollwertgesteuerten Fahrzeugverzögerung erfolgt.

10. Bremskraft-Steuerungssystem für ein Straßenfahrzeug mit einer elektrisch steuerbaren Vierkreis-Bremsanlage, bei der die mittels der einzelnen Radbremsen (11 bis 14) entfaltbaren Bremskräfte radindividuell einstellbar sind, und mit einem Fahrwerk, das als Normalkraft-Steuerungssystem den Fahrzeugrädern einzeln zugeordnete Stelleinrichtungen (16) umfaßt, mittels derer die an den Fahrzeugrädern wirksamen Normalkräfte bei Erhaltung der Summe der Achslasten variierbar sind, wobei diese Stelleinrichtungen (16,17) dahingehend ausgelegt sind, daß das Fahrzeuggewicht überwiegend und annähernd auf einem der Vorderräder und einem der Hinterräder des Fahrzeuges abstützbar ist, wobei weiter das Bremskraft-Steuerungssystem dahingehend ausgelegt ist, daß die mittels einer Vorderradbremse (11 oder 12) zusammen mit einer Hinterradbremse (13 oder 14) entfaltbaren Bremskräfte insgesamt dem mit einem maximalen Betrag des zwischen der Fahrbahn und den gebremsten Rädern ausnutzbaren Kraftschlußbei-

wertes μ multiplizierten Fahrzeuggesamtgewicht entspricht, und wobei eine elektronische Steuereinheit (24) vorgesehen ist, die im Bedarfsfall einer kurvenfahrt-stabilisierenden fahrdynamischen Regelung zunächst die Normalkraft-Stelleinrichtung im Sinne einer Kompensation eines überoder untersteuernden Verhaltens des Fahrzeuges aktiviert, und, falls hierdurch eine hinreichende Stabilisierung des Fahrzeuges noch nicht erreichbar ist, zusätzlich das Bremskraft-Steuerungssystem im Sinne des eingeleiteten fahrdynamischen Regelungsmodus aktiviert.

**Claims**

1. Braking force control system (10)for a road vehicle with an electrically controllable four-circuit brake system, in which the braking forces generated via the individual wheel brakes (11 to 14) can be adjusted individually for each wheel, and having a chassis which is fitted with adjusting mechanisms (16) to vary the pressure load acting on the vehicle wheels, at least one pressure load-adjusting mechanism (16, 17) being provided for each vehicle wheel, the brake system being additionally designed so that the braking force which can be generated by means of a front wheel brake (11 or 12) and the rear wheel brake (14 or 13) arranged opposite it as viewed along the diagonal of the vehicle corresponds in total to the vehicle weight multiplied by a maximum amount of the effective coefficient of adhesion μ acting between the road and the braked wheels, and the mechanisms (16, 17) for adjusting the pressure load distribution are designed so that the vehicle weight can be essentially supported, i. e. apart from a small fraction thereof constituting only a few percent of the wheel loads that are symmetrically and more or less uniformly distributed in the static state, on one of the front wheels and the rear wheel of the vehicle disposed diagonally opposite it.

2. Braking force control system as claimed in claim 1, **characterised in that** the increase in braking forces generated when only a front wheel brake (11 or 12) and the rear wheel brake (14 or 13) lying diagonally opposite it are used to generate the braking force is produced by increasing the brake pressure transmitted to these wheel brakes.

3. Braking force control system as claimed in claim 1, **characterised in that** the wheel brakes (11 to 14) have four-piston brake calipers and pressure is applied to only one respective piston pair during normal braking mode, corresponding to application of all the wheel brakes (11 to 14), and pressure is applied to both piston pairs of the wheel brakes in diagonal braking mode when pressure is applied to only one front wheel brake and one rear wheel brake.

4. Braking force control system as claimed in one of claims 1 to 3, **characterised in that** the rear wheel brakes are of the same design, in terms of the potential braking force obtainable, as the front wheel brakes and, for the purposes of driving in reverse, the brake system can be switched to a mode in which braking force is distributed so that the proportion of braking force switched to the rear axle is higher than the proportion of braking force on the front axle.

5. Braking force control system as claimed in one of claims 1 to 4, **characterised in that** on a timed basis, preferably at the start of a braking action, only one of the wheel brakes (11 to 14) is used to generate braking force and a status signal for the friction of the brake pads is obtained by comparing the measured value of the vehicle deceleration with a desired deceleration value computed on the basis of the geometric brake data and the measured brake pressure.

6. Braking force control system as claimed in one of claims 1 to 5, **characterised in that** on a time basis, preferably in a regular sequence, only one of the wheel brakes (11 to 14) is used to generate the braking force, the pressure load control mechanism of the braked wheel being activated during this braking, with a view to reducing the wheel load of the braked wheel so that the wheel load is reduced to a small fraction, e.g. 10% to 30%, of the half axle load, and, on reaching a slip value characteristic of a maximum use of adhesion, the effective road-adhesion coefficient is determined on the basis of the ratio of braking force to pressure load.

7. Braking force control system as claimed in one of claims 1 to 6, **characterised in that** during partial or full braking initiated by the driver intended to bring about a significant deceleration of the vehicle, the braking force and pressure load control system is activated in such a way that, at the start of braking, a predominant proportion, e.g. 80% to 90%, of the vehicle weight is supported by means of only two diagonally opposite vehicle wheels (e.g. the left-hand front wheel and the right-hand rear wheel) and the wheels of the other vehicle diagonal are relieved of load accordingly, and the wheel brake(s) on the wheels relieved of load is/are activated with a stepped or monotonously continuous increase in braking pressures and the rate of change $d\omega/dt$ in wheel speed is determined continuously, the maximum effective road-adhesion coefficient for the brake pressure $p_B$ causing the maximum rate of change in wheel speed being determined by the equation

$$\mu = \frac{\Theta \cdot \left(\frac{d\omega}{dt}\right)_{max} - M_B}{F_N \cdot r_{dyn}}$$

in which $\Theta$ represents the moment of inertia of the braked wheel relieved of load, $F_N$ is the wheel load acting on it, $r_{dyn}$ represents its dynamic rolling radius and $M_B$ is the braking moment produced by the brake pressure generated at maximum change of rate in the speed, the braking moment $M_B$ in turn being determined by the equation

$$M_B = p_B \cdot C_B$$

in which $p_B$ denotes the brake pressure applied and $C_B$ is a proportionality factor taking account of the brake design.

8. Braking force control system as claimed in one of claims 1 to 7, **characterised in that** the braking force control applied is dependent on deceleration so that the desired value default-signal which the driver applies by operating a brake pedal (30) corresponds to a defined vehicle deceleration.

9. Braking force control system as claimed in one of claims 1 to 8, in which the vehicle is fitted with at least one battery-powered electric drive or auxiliary drive, which can be switched so as to generate braking force in a regeneration mode for the purpose of charging the vehicle battery, **characterised in that** the operating and functional status of the vehicle battery is permanently monitored and, although the regeneration capacity is applied as far as possible to generating braking force, at an instant just before it no longer becomes possible to charge the vehicle battery quickly, the hydraulic wheel brakes (11 to 14) are activated in order to hold the vehicle deceleration under the control of a desired value.

10. Braking force control system for a road vehicle with an electrically controllable four-circuit brake system, in which the braking forces generated via the individual wheel brakes can be adjusted individually for each wheel, and having a chassis with adjusting mechanisms (16) individually assigned to the vehicle wheels in the form of a system for controlling the pressure load, by means of which the pressure load acting on the vehicle wheels can be varied whilst maintaining the sum of the axle loads, these adjusting mechanisms (16, 17) being designed so that the vehicle weight can be supported predominantly and virtually on one of the front wheels and one of the rear wheels of the vehicle, the brake system being additionally designed so that the braking forces which can be generated by means of a front wheel brake (11 or 12) in conjunction with a rear wheel brake (13 or 14) corresponds in total to the effective coefficient of adhesion $\mu$ acting between the road and the braked wheels multiplied by the total weight of the vehicle, and in which an electronic control unit (24) is provided which, if a correction is needed to stabilise the driving dynamics during cornering, firstly activates the pressure load adjusting mechanism in order to compensate for over-steering or under-steering behaviour of the vehicle, and, if this does not stabilise the vehicle sufficiently, additionally activates the braking force control system in order to assist the initiated correction mode to the driving dynamics.

## Revendications

1. Système (10) de commande de la force de freinage pour un véhicule routier comportant une installation de freinage commandable électriquement à quatre circuits, dans laquelle les forces de freinage pouvant être fournies au moyen des différents freins de roues (11 à 14) sont réglables individuellement pour chaque roue, et comportant un châssis, qui est équipé de dispositifs de réglage (16) pour modifier les forces normales agissant sur des roues du véhicule, et dans lequel pour chaque roue du véhicule il est prévu au moins un dispositif (16, 17) de réglage de la force normale, et en outre l'installation de freinage est agencée de telle sorte que la force de freinage, qui peut être produite au moyen d'un frein de roue avant (11 ou 12) et du frein de roue arrière (14 ou 13) situé à l'opposé du frein de roue avant en diagonale dans le véhicule, correspond à la vitesse du véhicule multipliée par une valeur maximale absolue du coefficient de frottement d'adhérence utilisable entre la chaussée et les roues freinées, et les dispositifs de réglage (16, 17) sont conçus pour la répartition de la force normale de telle sorte que le poids du véhicule peut être supporté essentiellement, c'est-à-dire en dehors d'une faible fraction du poids du véhicule, égale seulement à quelques pour-cent des charges de roues réparties symétriquement de façon approximativement égale dans le cas statique, sur l'une des roues avant et la roue arrière du véhicule, qui est située à l'opposé de cette roue en diagonale.

2. Système de commande de la force de freinage selon la revendication 1, **caractérisé en ce que** l'accroissement de la force de freinage dans le fonctionnement de freinage, lors duquel seul un frein de roue avant (11 ou 12) et le frein de roue arrière (14 ou 13) disposé à l'opposé de ce frein de roue avant en diagonale sont utilisés pour la production de la force de freinage, s'effectue par accroissement de 1a pression de freinage injectée par ces freins de roues.

3. Système de commande de la force de freinage selon la revendication 1, **caractérisé en ce que** les freins de roues (11 à 14) comportent des étriers de frein à quatre pistons, auquel cas dans le fonctionnement de freinage normal, auquel correspond l'utilisation de tous les freins de roues (11 à 14), respectivement seule une paire de pistons peut être chargée par une pression et dans le fonctionnement de freinage en diagonale, dans lequel un frein de roue avant et un frein de roue arrière sont chargés par la pression de freinage, les deux paires de pistons des freins de roues sont chargés par une pression.

4. Système de commande de la force de freinage selon l'une des revendications 1 à 3, **caractérisé en ce que** pour ce qui concerne la production possible de la force de freinage, les freins de roues arrière (11) ont le même agencement que les freins de roue avant et que l'installation de freinage pour la marche arrière peut être commutée sur une répartition de la force de freinage avec une composante de la force de freinage de l'essieu arrière supérieure à la composante de la force de freinage de l'essieu avant.

5. Système de commande de la force de freinage selon l'une des revendications 1 à 4, **caractérisé en ce que** seul l'un des freins de roues (11 à 14) est utilisé par intervalles, de préférence au début d'un freinage, pour la production de la force de freinage et un signal d'état pour le coefficient de frottement des garnitures de frein est obtenu par comparaison d'une valeur mesurée de la décélération du véhicule à une valeur de décélération .de consigne, calculée sur la base des données géométriques du frein et de la pression de freinage mesurée.

6. Système de commande de la force de freinage selon l'une des revendications 1 à 5, **caractérisé en ce que** seul l'un des freins de roues (11 à 14) est utilisé pour la production de la force de freinage, par intervalles, de préférence selon une séquence réglable, auquel cas pendant ce freinage, le dispositif de réglage de la force normale de la roue freinée est commandé dans le sens d'une réduction de la charge de la roue freinée de telle sorte que la charge de roue est réduite à une faible fraction, par exemple 10 % à 30 %, de la moitié de la charge d'essieu et, lorsqu'une valeur de glissement caractéristique de l'utilisation maximale possible de la force d'adhérence est atteinte, le coefficient de frottement effectif sur la chaussée est déterminé à partir du rapport de la force de freinage / force normale.

7. Système de commande de la force de freinage selon l'une des revendications 1 à 6, **caractérisé en ce que** dans le cas d'un freinage partiel ou complet déclenché par le conducteur et axé sur une décélération importante du véhicule, il se produit une commandé du système de commande de la force de freinage et de la force normale de telle sorte qu'au début du freinage, un pourcentage prépondérant, par exemple 80 % à 90 %, du poids du véhicule, est supporté par l'intermédiaire de seulement deux roues du véhicule opposées l'une à l'autre en diagonale (par exemple la roue avant gauche et la roue arrière droite) et les roues de l'autre diagonale du véhicule sont déchargées de façon correspondante, et qu'une commande du ou des freins de roues est réalisée au niveau d'au moins l'une et de préférence des deux roues déchargées du véhicule au moyen d'un accroissement pas-à-pas ou continu monotone de la pression de freinage et que le taux de variation dω/dt de la vitesse de rotation de roue est commandé de façon continue et que le coefficient de frottement μ de la chaussée utilisable au maximum pour la décélération du véhicule, est déterminé en fonction de la valeur maximale $(d\omega/dt)_{max}$ du taux de variation de la vitesse de rotation conformément à la relation

$$\mu = \frac{\theta \cdot \left(\frac{d\omega}{dt}\right)_{max} - M_B}{F_N \cdot r_{dyn}}$$

dans laquelle $\Theta$ désigne le moment d'inertie de la roue déchargée freinée, $F_N$ désigne la charge de roue active sur cette roue, $r_{dyn}$ désigne son rayon de roulement dynamique et $M_B$ désigne le moment de freinage qui est fourni par la production de la pression de freinage pour le taux de variation maximum de la vitesse de rotation et qui pour sa part est fourni par la relation

$$M_B = p_B \, C_B$$

dans laquelle $p_B$ désigne la pression de freinage commandée et $C_B$ désigne un facteur de proportionnalité qui prend en compte la conception des freins.

8. Système de commande de la force de freinage selon l'une des revendications 1 à 7, **caractérisé en ce que** la régulation de la force de freinage s'effectue en fonction d'un retard de telle sorte que le signal de prédétermination de la valeur de consigne, que le conducteur commande par actionnement d'une pédale de frein (30), correspond à une décélération du véhicule définie.

9. Système de commande de la force de freinage selon l'une des revendications 1 à 8, dans lequel le véhicule est équipé d'au moins un dispositif d'entraînement électrique ou d'un dispositif d'entraînement auxiliaire électrique, alimenté par batterie et qui pour produire la force de freinage, peut être commuté dans un fonctionnement de récupération convenant pour charger la batterie du véhicule, **caractérisé** en que moyennant un contrôle permanent de l'état de fonctionnement et de l'état de marche de la batterie du véhicule, on utilise assurément la capacité de récupération aussi largement que possible pour la production de la force de freinage, mais en temps opportun, avant qu'une charge rapide de la batterie du véhicule ne soit plus possible, l'activation des freins de roues hydrauliques (11 à 14) s'effectue dans le sens du maintien de la décélération du véhicule commandée par la valeur de consigne.

10. Système de commande de la force de freinage pour un véhicule routier comportant une installation de freinage à quatre circuits, commandable électriquement, dans laquelle la force de freinage peut être produite au moyen des différents freins de roues (11 à 14) sont réglables individuellement pour chaque roue, et comportant un châssis qui comporte, comme système de commande de la force normale, des dispositifs de réglage (16) associés individuellement aux roues du véhicule, et à l'aide duquel les forces normales agissant au niveau des roues du véhicule peuvent être modifiées, tout en maintenant 1a somme des charges d'essieux, ces dispositifs de réglage (16, 17) étant conçus de telle sorte que le poids du véhicule peut être supporté dans une large mesure et approximativement par l'une des roues avant et l'une des roues arrière du véhicule, et dans lequel en outre le système de commande de la force de freinage est conçu de telle sorte que la force de freinage, qui peut être produite au moyen d'un frein de roue avant (11 ou 12) conjointement avec un frein de roue arrière (13 ou 14), correspond globalement au poids total du véhicule multiplié par une valeur absolue maximale du coefficient de frottement d'adhérence $\mu$ pouvant être utilisé entre la chaussée et les roues freinées, et dans lequel il est prévu une unité de commande électronique (24), qui en cas de besoin pour une régulation dynamique de conduite, qui établit une stabilisation dans le cas du franchissement d'une courbe, active tout d'abord le dispositif de réglage de la force normale dans le sens d'une compensation d'un comportement survireur ou sous-vireur du véhicule, et dans le cas où l'on ne peut pas encore obtenir ainsi une stabilisation suffisante du véhicule, le système de commande de la force de freinage peut être activé en supplément dans le sens du mode de régulation dynamique de conduite déclenché.

Fig.1

EP 0 929 427 B1

14

Fig.2